Europäisches Patentamt

(19) European Patent Office

Office européen des brevets

(11) Publication number: **0 032 956**
**B1**

(12) # EUROPEAN PATENT SPECIFICATION

(45) Date of publication of patent specification: **30.09.87**

(51) Int. Cl.⁴: **G 06 F 12/10, G 06 F 13/00**

(21) Application number: **80901416.0**

(22) Date of filing: **24.07.80**

(86) International application number:
**PCT/JP80/00169**

(87) International publication number:
**WO 81/00321 05.02.81 Gazette 81/04**

(54) **DATA PROCESSING SYSTEM UTILIZING HIERARCHICAL MEMORY.**

(30) Priority: **25.07.79 JP 94512/79**

(43) Date of publication of application:
**05.08.81 Bulletin 81/31**

(45) Publication of the grant of the patent:
**30.09.87 Bulletin 87/40**

(84) Designated Contracting States:
**DE FR GB**

(56) References cited:
**JP-A-51 138 346**
**JP-A-53 047 240**
**US-A-3 840 863**
**US-A-4 056 845**

**COMPUTER GROUP NEWS, vol. 2, no. 8, March 1969, pages 9-13, New York, US; C.J. CONTI: "Concepts for buffer storage"**

**COMPUTER DESIGN, vol. 10, no. 1, January 1971, pages 87-93, Concord, US; R.M. MEADE: "Design approaches for cache memory control" Motooka Itaru Hen "Keisanki System Gijutsu" (1978-6-30) The Ohm-Sha, Ltd. P30-32**

(73) Proprietor: **FUJITSU LIMITED**
**1015, Kamikodanaka Nakahara-ku**
**Kawasaki-shi Kanagawa 211 (JP)**

(72) Inventor: **HATTORI, Akira**
**444-5, Eda-cho, Midori-ku**
**Yokohama-shi Kanagawa 227 (JP)**
Inventor: **TSUCHIMOTO, Takamitsu**
**2-12-10, Kuriya Tama-ku**
**Kawasaki-shi Kanagawa 214 (JP)**

(74) Representative: **George, Sidney Arthur et al**
**GILL JENNINGS & EVERY 53-64 Chancery Lane**
**London WC2A 1HN (GB)**

Courier Press, Leamington Spa, England.

# 0 032 956

**Description**

This invention relates to a data processing system utilizing hierarchical memories, such as buffer memories of a plurality of central processing units, a main memory cooperating with the central processing units, an intermediate buffer memory located between the central processing units and the main memory, and, more particularly, relates to a system in which so-called move-in and move-out operations are achieved, between the intermediate buffer memory and the main memory, under a so-called swap control method, in which both the intermediate buffer memory and the main memory are controlled by a so-called set associative method, and in which the main memory itself is accessed under a so-called interleave control method.

Generally, in a large capacity memory, the main memory comprises a plurality of memory apparatuses. Each of these memory apparatuses is called a bank. A head address of a desired one of the banks is usually specified by one or more of the higher order bits of an address information. For example, if there are four banks in the main memory, the head address of the desired bank can be specified by two bits $(4=2^2)$ of the address information. Thus, one of the desired banks can be selected by using the higher order bits of the address information.

On the other hand, in the above-mentioned data processing system, since both the intermediate buffer memory and the main memory are controlled by the set associative method, it is necessary for the address information to specify one desired set to be accessed by the central processing unit. Usually, the set can be specified by so-called set address bits, other than one or more of said higher order bits, which are contained in the address information.

As mentioned above, the desired set to be accessed is specified by the address information, and said move-in and move-out operations are achieved by using the address information, in order to realize a swapping of data between the intermediate buffer memory and a main memory. In this case, it should be noted that the bank which stores a data to be read, through the move-in operation from the main memory to the intermediate buffer memory, is not always the same as the bank which stores a data to be written, through the move-out operation from the intermediate buffer memory to the main memory. If the bank in which the move-in operation is conducted, is always the same as the bank in which the move-out operation has been conducted during one step for executing a certain program, the process for achieving the management of the main memory will be simplified, and also the operating speed of the main memory will be increased. However, in the usual data processing system having hierarchal memories, it is difficult to simplify the above mentioned process for achieving the management of the main memory, and also the operating speed of the memory cannot be increased. This is because, as previously mentioned, since a requirement, during said one step, for occupying the bank often coincides with a requirement, during another step, for occupying the same bank, it is necessary to introduce a particular protocol in the system, by which protocol traffic control between these conflicting steps is performed.

Disclosure of invention

An object of the present invention is, therefore, to provide a data processing system having hierarchal memories in which the bank for conducting the move-in operation can be always the same as the bank for conducting the corresponding move-out operation, and accordingly, it is possible to simplify the process for achieving the management of the main memory and also the operating speed of the main memory can be increased.

According to the present invention, there is provided a data processing system having hierarchical memories, including a central processing unit having a buffer memory; a main memory having a plurality of memory banks to be accessed by the central processing unit via an intermediate buffer memory coupled between the central processing unit and the main memory; wherein move-out and move-in of an accessed data block between the intermediate buffer memory and the main memory are achieved by a swap control method; wherein the two memories are controlled by a set associative method; wherein the main memory is accessed by an interleave control method and the main memory and the intermediate buffer memory are accessed by address data which include both bank-selection address bits, for specifying any one of the banks, and set-selection address bits, for specifying the data block to be moved-out or moved-in; characterised by address modifying means for replacing a group of the bank-selection address bits by a group of the set-selection address bits.

Embodiments of the invention will now be described, by way of example, with reference to the accompanyig drawings, in which

Fig. 1 illustrates a conventional data processing system having hierarchical memories to which the present invention is applicable;

Fig. 2 illustrates one example of a construction of a buffer memory and a main memory shown in Fig. 1;

Fig. 3A depicts timing charts used for explaining the sequence of the prior art for conducting successive pairs of move-out and move-in operations;

Fig. 3B depicts timing charts used for explaining the sequence of the present invention for conducting successive pairs of move-out and move-in operations;

Fig. 4 depicts a conventional data format of the address information;

2

Figs. 5A, 5B and 5C illustrate a main memory of Fig. 2 which is constructed in the $2^0$-way, the $2^1$-way and the $2^2$-way interleave modes, respectively;

Fig. 6 illustrates another example of a construction of the main memory shown in Fig. 2;

Fig. 7 depicts data formats of address information, used for explaining a so-called hashing operation;

Fig. 8A illustrates an example of a data processing system. according to the present invention, which includes a memory access controller; and

Fig. 8B illustrates an example of a gate circuit shown in Fig. 8A.

A detailed description of the preferred embodiments is presented below, with reference to the accompanying drawings.

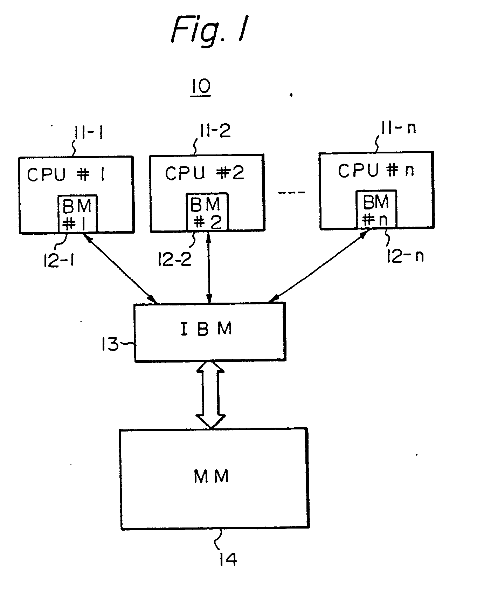

Referring to Fig. 1, which illustrates a conventional data processing system having hierarchal memories to which the present invention is applicable, a system 10 is mainly comprised of a plurality of central processing units (CPU#1, CPU#2 ... CPU#n) 11-1, 11-2 ... 11-n, buffer memories (BM#1, BM#2 ... BM#n) 12-1, 12-2 ... 12-n employed in respective central process units 11-1, 11-2 ... 11-n, an intermediate buffer memory 13 and a main memory 14. The main memory 14 cooperates with each of the central processing units (11-1, 11-2 ... 11-n) via the intermediate buffer memory 13 and respective buffer memories 12-1, 12-2 ... 12-n. In the system 10, the present invention is particularly applied to both the memories 13 and 14. Generally, the main memory 14 is a very large capacity memory, however, the memory 14 has a shortcoming in that an access time is considerably long, and accordingly a high speed accessing operation cannot be expected. Therefore, the intermediate buffer memory 13 is usually introduced between the main memory 14 and the central processing units 11-1 through 11-n so as to overcome the above mentioned shortcoming of the main memory 14.

In the system 10, the intermediate buffer memory 13 and the main memory 14 are controlled by the set associative method. As widely known, according to the set associative method, the memory area of the memory 13 is divided into a plurality of sets. Each of the sets comprises a plurality of data blocks. The memory area of the memory 14 is also divided into the same number of identical sets. In this case, each data communication between the memories 13 and 14 is carried out only between a certain one of the sets in the memory 13 and a corresponding one of the sets in the memory 14, so that achieving management of the memories 13 and 14 can be very simplified. However, it should be noted that the above mentioned sets are not physically existing objects, but are logically or imaginary existing objects. A general concept regarding "set associative" may be clarified with reference to, for example, an article in the magazine "Computer Group News", published on March 9, 1969 in U.S.A., entitled "Concepts for Buffer Storage". Further, the memories 13 and 14 are controlled under the swap control method. As widely known, according to the swap control method, if data to be accessed by the central processing unit is found in the intermediate memory 13, the central processing unit executes a specified step by using the data found in the memory 13. On the contrary, if data to be accessed is not found in the intermediate memory 13, the corresponding data block is read from the main memory 14 to the intermediate buffer memory 13 through move-in operation. In this case, since the memory 13 is always full with data blocks, some data block must be written from the memory 13 to the memory 14 through the move-out operation so as to create a memory space in the memory 13 for accommodating said data block to be moved-in from the memory 14. However, if the content of the data block to be moved-out has not yet been changed by some unit (11-1 through 11-n), this data block is not moved-out to the memory 14, but is erased. This is because the same data block is still stored in the memory 14. On the contrary, if the content of the data block to be moved-out has been changed by some unit ((11-1 through 11-n), this data block must be moved-out to the memory 14, so as to rewrite the content of the corresponding data block of the memory 14. Whether or not the contents of the data blocks in the memory 13 have been changed, is detected by referring to the corresponding change bit contained in a so-called TAG which is located adjacent to the memory 13. Details of the TAG may be seen in, for example, an article in the magazine "Computer Design", published in January, 1971, in the U.S.A., entitled "Design Approaches for Cache Memory Control" and also other articles in the previously recited magazine.

Furthermore, in the system 10, the main memory 14 is accessed under the interleave control method. As widely known, the interleave control method is very useful for increasing the accessing speed of the memory 14 when the memory area thereof is divided into a plurality of independent banks. It should be noted that although the above mentioned sets are logical or imaginary existing objects, the banks are physically existing objects which exist as, for example, printed circuit boards. It should further be noted that, usually, there is no relationship between the sets and the banks. According to the interleave control method, it is possible to drive one bank for executing one step and, simultaneously, to drive another bank for executing another step, and thereby, high speed accessing can be obtained therein.

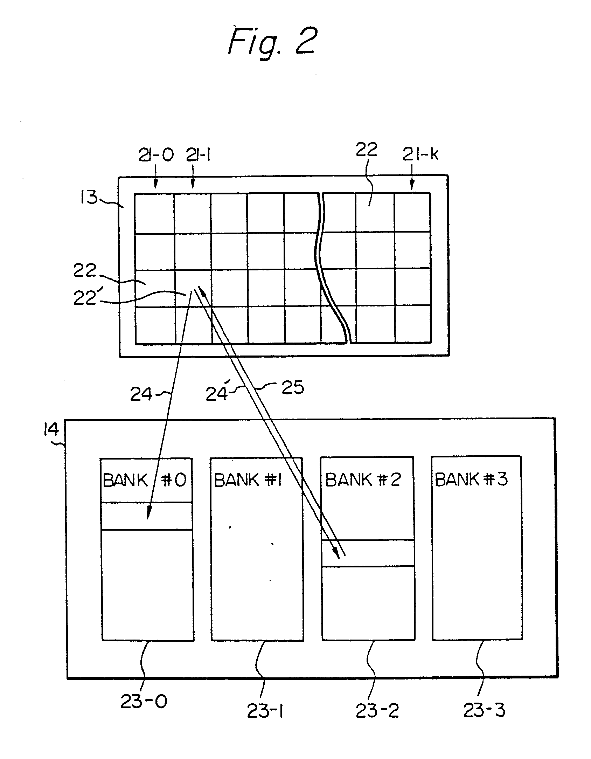

Fig. 2 illustrates one example of a construction of both the memories 13 and 14 shown in Fig. 1. In Fig. 2, intermediate buffer memory 13 is set up by a plurality of the sets 21-0, 21-1 ... 21-k. Each set is composed of the same number of data blocks 22. While, the main memory 14 is built by a plurality of banks, for example, banks (BANK#0, BANK#1 ... BANK#3) 23-0, 23-1 ... 23-3. When some central processing unit (see the CPUs of Fig. 1) accesses a desired one of the data blocks located in, for example, the set 21-1 of the memory 13, however, if the desired data block is not found in the set 21-1, the desired data block must be moved-in from the corresponding set in the memory 14. In this case, one of the data blocks, for example, the data block 22' is moved-out, via a line 24, to the corresponding bank, for example the bank 23-0, so as to create a memory space, in the set 21-1, for accommodating the desired data block stored in the memory 14. Usually, the data block 22' to be moved-out is a data block which is not used frequently by the CPUs. As mentioned above, the data block 22' to be moved-out is sent to the bank 23-0, because this bank 23-0 includes the set which is identical to the set 21-1 of the memory 13. Then the desired data block to be move-in is sent, via a line 25, from, for example the bank 23-2 to the memory space where the old data block 22' was located, because this bank 23-2 includes the set which contains the data block to be moved-in. Thus, the CPU can access the desired data block in the memory 13. As seen from Fig. 2, the move-out operation and the corresponding move-in operation are not usually conducted in the same banks, but in two different banks, such as 23-0 and 23-2. If it is guaranteed that each pair of the move-in and move-out operations are conducted in the same banks, the process for achieving management of the main memory 14 can be simplified and also the access time may be considerably reduced.

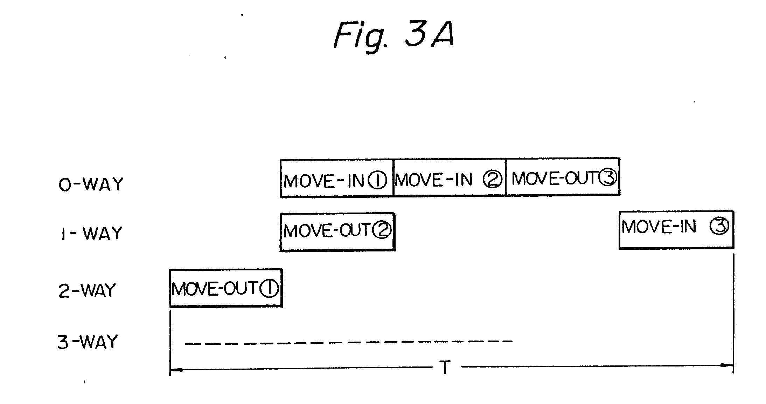

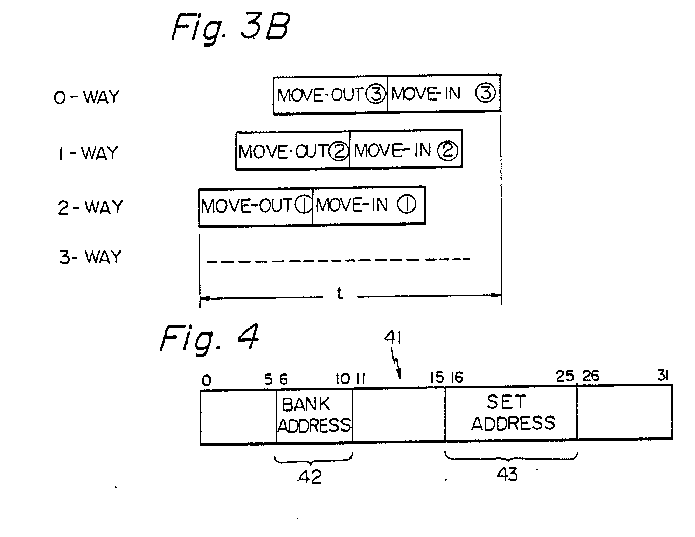

The reason for these facts will be clarified with reference to Figs. 3A and 3B, wherein Fig. 3A is a timing chart for use in explaining the sequence of the prior art for conducting successive pairs of move-out and move-in operations, and Fig. 3B is a timing chart for use in explaining the sequence of the present invention for conducting successive pairs of move-out and move-in operations. If each of the banks 23-0 to 23-3 can operate independently, there exist four ways, i.e. the 0-way, the 1-way, the 2-way and the 3-way, in the memory 14. (This is to be distinguished from a two-way interleave system in which, for example, the banks 23-0 and 23-1 would operate as a unit and the banks 23-2 and 23-3 would operate as another unit, independently of the banks 23-0 and 23-1). In Figs. 3A and 3B, the indications 0-WAY to 3-WAY represent the above-mentioned 0-way to 3-way. As seen from Fig. 3A, the move-out operation and the move-in operation in each of the steps ①, ②, ③ and so on, are conducted in different ways. For example, the step ① employs 2-WAY and 0-WAY, the step ② employs 1-WAY and 0-WAY, und the step ③ employs 0-WAY and 1-WAY. Accordingly, the steps must be shifted in phase so as to avoid the occurrence of a conflict between the steps which employ the same way at the same time. It should be understood that both the move-out and move-in operations cannot be conducted, simultaneously, in the same way. As a result, it takes a relatively long time (see T in Fig. 3A) for completing the successive steps ①, ② and ③. Thus, as previously mentioned, the operating (accessing) speed of the memory 14 cannot be increased, and, further, it is necessary to introduce the particular protocol, in the system, for performing the traffic control between the conflicting steps.

Contrary to the above, in the present invention, both the move-out and move-in operations in each of the steps ①, ②, ③ and so on, are conducted in the same way, for example, the steps ①, ② and ③ employ 2-WAY, 1-WAY and 0-WAY, respectively. As a result, it takes a relatively short time (see t in Fig. 3B) for completing the successive steps ①, ② and ③. Thus, the high operating (accessing) speed of the memory 14 can be obtained and further the above mentioned particular protocol, for avoiding the conflict of the steps, is not necessary.

The reason why such an overlapping sequence, as shown in Fig. 3B, can be realized, will be explained in detail hereinafter. Generally, speaking, according to the present invention, the address bits which are contained in the address information and used for specifying the desired one of the banks or ways, are set up so as to partially incorporate therein a part of the address bits which are contained in the same address information and used for specifying one of the sets defined by the set associative method.

Fig. 4 depicts a conventional data format, of the address information to be provided by either one of the CPUs, which CPU raises a request for accessing the memory 13. The reference numeral 41 represents the address information composed of, for example, 0 bit through the 31st bit. The address information contains first address bits 42, composed of the 6th bit through the 10th bit, and second address bits 43, composed of the 16th bit through the 25th bit. The first address bits 42 specify one of the banks or ways in the main memory. The second address bits 43 specify one of the sets predetermined according to the set associative method. Accordingly, the first address bits 42 may be called bank-selection address bits, and the second address bits 43 may be called set-selection address bits. In the present invention, the bank-selected address bits 42 partially include a part of the set-selection address bits 43, so that both the move-out and move-in operations in each step can be conducted in the same bank or way. Briefly speaking, if the bank-selection bits 42, composed of the 6th (⑥), 7th (⑦), 8th (⑧) and 9th (⑨) bits (10th bit is not used here), the lowest bit, that is 9th (⑨) bit, is modified in the following manner by using the last one or two bits of the set-selection-bits 43, that is the 24th bit ㉔ or 24th ㉔ and 25th ㉕ bits. In a case where the main memory 14 is built in a 1-way interleave mode, the bank-selection address bits are composed of (⑥, ⑦, ⑧, ⑨). In this case, the 9th bit ⑨ is not modified. However, in a case where the memory 14 is built in a 2-way interleave mode, the bank-selection address bits are modified to be (⑥, ⑦, ⑧, ㉕) by introducing the bit of the set-selection address bits therein. Therefore, either one of the two ways (2-way) is determined in accordance with the logic "1" or "0" of the bit ㉕. According to the set associative method, since the set in which the data block to be moved-out is stored is the same as the set in which the data block to be moved-in is stored, the logic of the bit ㉕ regarding the move-out operation is always the same as the logic thereof regarding the move-in operation. Consequently, both move-out and move-in operations are conducted in the same way (bank) among the two ways, defined by the logic "1" or "0" of the bit ㉕.

In a case where the memory 14 is built in a 4-way interleave mode, the bank-selection address bits are modified to be (⑥, ⑦, ㉔, ㉕) by introducing the bits of the set-selection address bits therein. Therefore, any one of the four ways (4-way) is determined in accordance with one of the logics ("0", "0", ("0", "1"), ("1", "0") and ("1", "1") of the bits 24 and 25. As explained above, according to the set associative method, since both the data block to be moved-out and the data block to be moved-in are always located in the same set, the logics of the bits ㉔ and ㉕ regarding the move-out operation are always the same as the logics thereof regarding the move-in operation. Consequently, both the move-out and move-in operations in each step are always conducted in the same way (bank).

As mentioned above, the bank-selection address bits are determined so as to reflect thereon a bit information of the set-selection address bits. Specifically, when the main memory 14 is constructed in a $2^m$-way interleave mode, m bits of the bank-selection address bits are modified by m bits of the set-selection address bits, wherein the number m is determined so as to make the number M to be a positive integer, where the M is defined by an expression of

$$M=B/2^m$$

where the B indicates the number of banks comprising the main memory 14. Preferably, said m bits of the set-selection address bits are chosen from the lower bits thereof, and also said m bits of the bank-selection-address bits are chosen from the lower bits thereof. This is because such lower bits are very liable to be changed for various kinds of data blocks. The above mentioned expression, that is

$$M=B/2^m,$$

will be clarified with reference to the following Table I.

TABLE I

| | B | Interleave modes | | | | m |
|---|---|---|---|---|---|---|
| No. 1 | 1 | 1BANK×1(2⁰)WAY | | | | 0 |
| No. 2 | 2 | 2BANK×1(2⁰)WAY | 1BANK×2(2¹)WAY | | | 0, 1 |
| No. 3 | 3 | 3BANK×1(2⁰)WAY | | | | 0 |
| No. 4 | 4 | 4BANK×1(2⁰)WAY | 2BANK×2(2¹)WAY | 1BANK×4(2²)WAY | | 0, 1, 2 |
| No. 5 | 5 | 5BANK×1(2⁰)WAY | | | | 0 |
| No. 6 | 6 | 6BANK×1(2⁰)WAY | 3BANK×2(2¹)WAY | | | 0, 1 |
| No. 7 | 7 | 7BANK×1(2⁰)WAY | | | | 0 |
| No. 8 | 8 | 8BANK×1(2⁰)WAY | 4BANK×2(2¹)WAY | 2BANK×4(2²)WAY | 1BANK×8(2³)WAY | 0, 1, 2, 3 |

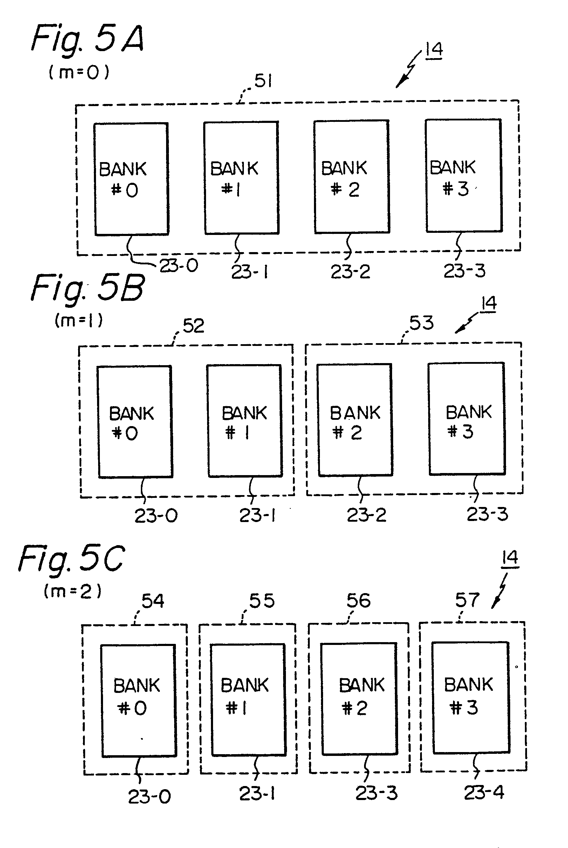

In the above recited Table I, columns respectively represent the number of banks (B), the interleave modes (INTERLEAVE MODES) and the number of m, and rows respectively classify respective cases No. 1 through No. 8. The case No. 4 corresponds to the construction of the main memory 14 shown in Fig. 2. The interleave modes of the Table I will be clarified with reference to Figs. 5A, 5B, and 5C. Figs. 5A, 5B and 5C illustrate the constructions of the main memory 14 which is built, respectively, in the interleave modes of (4 BANK×1 WAY), (2 BANK×2 WAY) and (1 BANK×4 WAY), corresponding to the case No. 4 of the Table I. When the main memory 14 is constructed in the interleave mode of the (4 BANK×1 WAY), as shown in Fig. 5A, the number m is selected to be 0 (m=0). When the memory 14 is constructed in the interleave mode of the (2 BANK×2 WAY), the number m is selected to be 1 (m=1). When the memory 14 is constructed in the interleave mode of the (1 BANK×4 WAY), the number m is selected to be 2 (m=2). In Figs. 5A, 5B and 5C, the areas 51 through 57 represent the ways, respectively. It should be noted that each way can operate independently. Accordingly, in Fig. 5A, only one move-out or move-in operation can be conducted in the banks 23-0 through 23-3, in Fig. 5B, one move-out or move-in operation can be conducted in both the banks 23-0, 23-1 (being enclosed by the way 52) and at the same time another move-out or move-in operation can be conducted in both the banks 23-2, 23-3 (being enclosed by the way 53), and in Fig. 5C, respective move-out or move-in operation can be conducted simultaneously in each of the banks, the bank 23-0 (way 54), the bank 23-1 (way 55), the bank 23-2 (way 56) and the bank 23-3 (way 57). In these figures, each of the banks has the same capacity of the data blocks.

When m=1, one of the bank-selection address bits (42) can be modified by one of the set-section address bits (43). In this case, if the logic of the previously mentioned bit ㉕ is "0", regarding one data block, the move-out and move-in operations can be conducted successively in the same way 52. At the same time, if the logic of the previously mentioned bit ㉕ is "1", regarding another data block, the move-out and move-in operations can be conducted successively in the same way 53. When m=2, two of

5

the bank-selection address bits (42) can be modified by two of the set-selection address bits (43). In this case, since there are four ($2^2$) independent ways, respective move-in or move-out operations can be conducted simultaneously in the ways 54 through 57, respectively. Consequently, the sequence of the move-out and move-in operations, such as shown in Fig. 3B, can be obtained.

When the number (B) of banks is an odd number, such as 1, 3, 5 or 7, it is impossible to divide the main memory 14 into two or more ways, as each of the ways must have the same number of banks, and accordingly, in such cases as Nos. 1, 3, 5 and 7, the memory 14 is constructed in the single interleave mode, similar to the mode shown in Fig. 5A. Therefore, in such cases, the present invention is not effective.

As previously mentioned, the number m of bits to be entered into the bank-selection address bits from the set-selection address bits, is defined by the expression, that is $M=B/2^m$. In detail, it is preferable that the number m is determined from the following expression.

$$m = \max \left\{ c : \frac{B}{2^x} = M \right\} \tag{1}$$

This expression means that the number m should be selected as a maximum value of various kinds of the integer x, where the integer x should satisfy the condition, that is

$$\frac{B}{2^x} = M.$$

The symbols B and M indicate the number of banks and a positive integer, respectively. With reference again to Figs. 5A, 5B and 5C, and the above recited expression

$$m = \max \left\{ x : \frac{B}{2^x} = M, \right\}$$

when the number B equals 4, there exists three kinds of positive integers M, that is 4 ($=4/2^0$: corresponding to Fig. 5A), 2 ($=4/2^1$: corresponding to Fig. 5B) and 1 ($=4/2^2$: corresponding to Fig. 5C). Therefore, there exists three kinds of integers x, that is 0, 1, and 2. Among these three integers 0, 1 and 2, the maximum value of x equals 2. Thus, it is preferable that the number m is selected to be 2, according to the above recited expression.

However, the above recited expression

$$m = \max \left\{ x : \frac{B}{2^x} = M \right\}$$

is useful only when each of the banks has the same capacity of the data blocks. If each of the banks does not have the same capacity of the data blocks, said expression is not applicable, but instead, the following expression is applicable.

$$m = \min \left\{ x, \, y : \frac{B}{x} = Mx, \, \frac{\left(\frac{U}{u}\right)}{2^y} = My \right\} \tag{2}$$

This equation means that the number m should be selected as a minimum value among x and y, where the integer x is a maximum value which satisfies the condition, that is

$$\frac{B}{2^x} = Mx$$

(Mx is a positive integer), and the integer y is a maximum value which satisfies the condition, that is

$$\frac{\left(\frac{U}{u}\right)}{2^y} = My$$

6

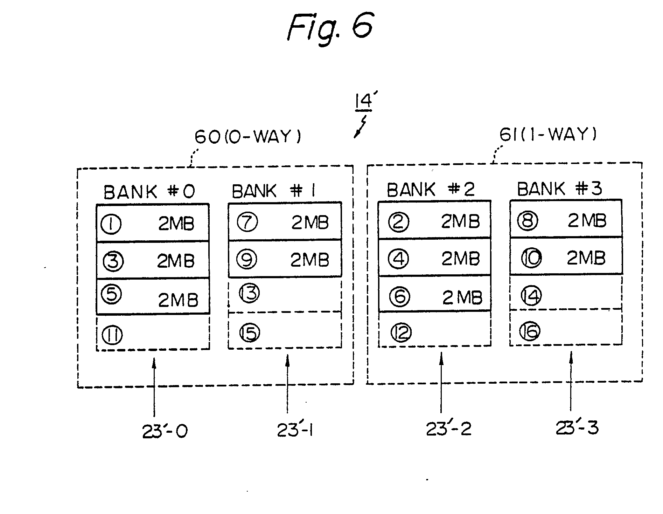

(My is a positive integer), the symbol U indicates total capacities of units for comprising all the banks and the symbol u indicates a capacity of unit for comprising each bank. The meanings of the above recited expression (2) will be clarified with reference to Fig. 6 and the following Table II. In Fig. 6, banks 23'-0 through 23'-3 correspond to the aforesaid banks 23-0 through 23-3, respectively. However, these banks do not have the same capacity as the data blocks, as do the aforesaid banks 23-0 through 23-3. For example, the banks 23'-0 through 23'-3 have the capacities of units 6 MB (Mega Byte), 4 MB, 6 MB and 4 MB, respectively, where the capacity of the unit comprising each bank is 2 MB. The numerals ① through ⑩ represent respective units of banks. The numerals ⑪ through ⑱ represent respective imaginary units of banks, which units are not actual existences. As seen from Fig. 6, the total capacities of units, are 20 MB, that is U=20, the capacity of the unit is 2 MB, that is u=2 and the number B of banks is 4, that is B=4. Taking these numbers into consideration, in the expression (2), the integer x is determined to be 2, where the condition

$$\frac{B}{2^x} = Mx$$

is specifically expressed by

$$\frac{4}{2^2} = 1,$$

and the integer y is determined to be 1, where the condition

$$\frac{\left(\dfrac{U}{u}\right)}{2^y} = My$$

is specifically expressed by

$$\frac{\left(\dfrac{20}{2}\right)}{2^1} = 5.$$

Accordingly, the number m=min {x, y}, that is m=min {2, 1}, is determined to be 1. As a result, the main memory 14' of Fig. 6 is constructed in a 2($2^m = 2^1$) way interleave mode. The reference numerals 60 and 61, in Fig. 6, represent a 0-way and a 1-way, respectively. Accordingly, the banks 23'-0 and 23'-1 are allotted to the 0-way 60, and the banks 23'-2 and 23'-3 are allotted to the 1-way 61. Allocations of the units ① through ⑩ shown in Fig. 6 will be clarified with reference to the following Table II.

TABLE II

| Unit No. | Bank-selection Address Bits | | | | BANK No. | WAY No. |
|---|---|---|---|---|---|---|
| | ⑦ | ⑧ | ⑨ | ㉕ | | |
| ① | "0" | "0" | "0" | "0" | 0 | 0 |
| ② | "0" | "0" | "0" | "1" | 1 | 1 |
| ③ | "0" | "0" | "1" | "0" | 0 | 0 |
| ④ | "0" | "0" | "1" | "1" | 1 | 1 |
| ⑤ | "0" | "1" | "0" | "0" | 0 | 0 |
| ⑥ | "0" | "1" | "0" | "1" | 1 | 1 |
| ⑦ | "0" | "1" | "1" | "0" | 2 | 0 |
| ⑧ | "0" | "1" | "1" | "1" | 3 | 1 |
| ⑨ | "1" | "0" | "0" | "0" | 2 | 0 |
| ⑩ | "1" | "0" | "0" | "1" | 3 | 1 |
| ⑪ | "1" | "0" | "1" | "0" | Non existence | |
| ⑫ | "1" | "0" | "1" | "1" | ditto | |
| ⑬ | "1" | "1" | "0" | "0" | ditto | |
| ⑭ | "1" | "1" | "0" | "1" | ditto | |
| ⑮ | "1" | "1" | "1" | "0" | ditto | |
| ⑯ | "1" | "1" | "1" | "1" | ditto | |

In the above recited Table II, the numbers of units (UNIT No.) indicate the units ① through ⑯ of Fig. 6, the bank numbers (BANK No.) 0, 1, 2 and 3, respectively, represent the banks 23'-0 through 23'-3 of Fig. 6, the way numbers (WAY No.) 0 and 1 represents the 0-way 60 and 1-way 61 of Fig. 6. The bank-selection address bits ⑦, ⑧ and ⑨ correspond to the address area 42 of Fig. 4. The bit ㉕ is entered into the bank-selection address bits from the set-selection address bits 43 of Fig. 4. The symbols "0" and "1" in the Table II indicate the logics of the bits. As seen the Table II, one move-out or move-in operation regarding one data block to be replaced and another move-out or move-in operation regarding another data block to be replaced can be conducted simultaneously, in the 0-way (60) and 1-way (61), respectively. The 0-way and the 1-way are specified by the logics "0" and "1" of the bit ㉕. In this case, said "one data block" belongs to one set having, at its lowest bit ㉕, the logic "0", and said "another data block" belongs to another set having, at its lowest bit ㉕, the logic "1".

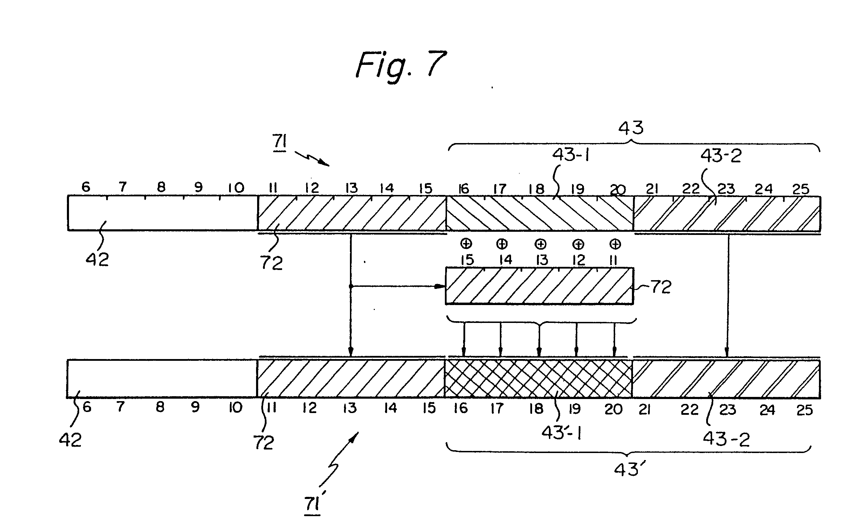

It is required, in the intermediate buffer memory 13 (Fig. 2), that all the sets 21-0 through 21-k be used uniformly. In other words, these sets must be accessed by the CPU at random. As widely known, for the purpose of satisfying the above mentioned requirement, a so-called hashing operation is often introduced in the system. Fig. 7 depicts the data format of the address information to which no hashing operation is applied, and also depicts data format of the address information to which the hashing operation is applied. Therefore, the address information 71 is substantially the same as the address information 41 of Fig. 4. The data format (71) includes the aforesaid bank-selection address bits 42 and the set-selection address bit 43. The address information 71' is obtained through the hashing operation. The original information 71 is composed of address areas 42, 72, 43-1 and 43-2. While, the hashed information 71' is composed of address areas 42, 72, 43'-1 and 43-2. Especially, the address areas 72, 43-1 (43'-1) and 43-2 specify the address of the intermediate buffer memory 13 (Figs. 1 and 2). The hashed area 43'-1 is produced as the result of an EOR (Exclusive OR) operation between the area 43-1 and the area 72. The symbols ⊕ indicate the EOR operation, bit-by-bit, between the areas 43-1 and 72.

**0 032 956**

If the hashed address information 71' is applied to the memory 13, the above mentioned m bits, which are entered from the set-selection address bits 43' to the bank-selection address bits 42, must not be chosen from the area 43'-1 but from the area 43-2. This is because the area 43'-1 does not contain the correct set-selection address bits, and accordingly, the correct allocation of the ways, as represented in the above recited Table II, cannot be performed. It should be noted that the correct set-selection address bits are defined only by the two areas 43-1 and 43-2. Therefore, the above mentioned m bits should be chosen from the area 43-2 of the information 71'.

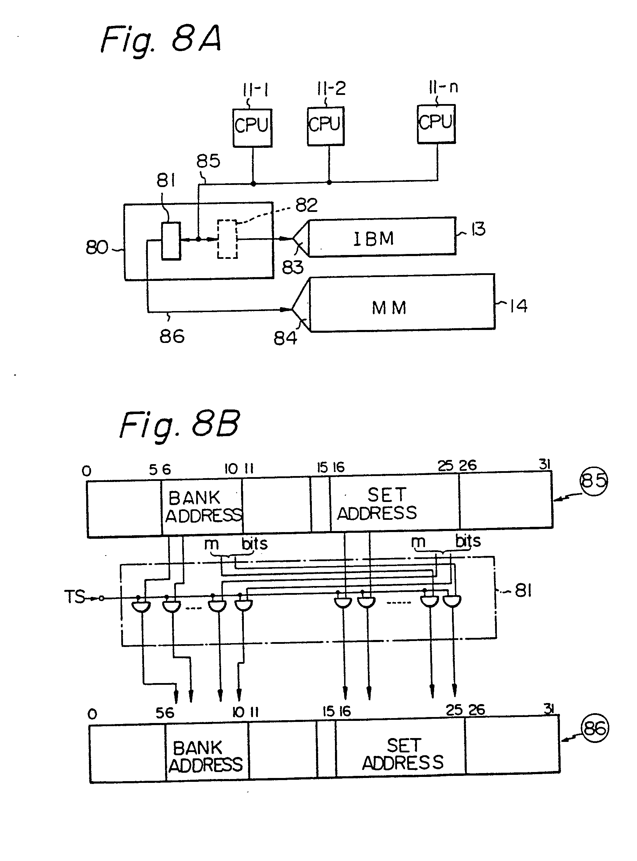

Fig. 8A illustrates an example of a data processing system, according to the present invention, which includes a memory access controller. The members, which have the same reference numerals and symbols as those indicated in Fig. 1, are identical to each other. The reference numeral 80 represents the memory access controller. The controller 80 includes a gate means 81 and a means 82, for carrying out the hashing operation. The means 82 is included therein, if necessary. The reference numerals 83 and 84 represent decoders. One example of the gate means 81 of Fig. 8A is illustrated in Fig. 8B. As seen from Fig. 8B, the m bits of the set-selection address bits are entered into the bank-selection address bits, via respective AND gates. The AND gates are caused to open or close in synchronism with a timing signal TS. The address information ⑧⑤ is transmitted on a bus 85 shown in Fig. 8A and the address information ⑧⑥ is transmitted on a bus 86 shown in Fig. 8A.

As explained above, according to the present invention, the process for achieving the management of the main memory can be simplified and, further, the operating (accessing) speed of the main memory can be increased.

### Table of reference numerals and parts

| | |
|---|---|
| 11-1, 11-2, 11-n | central processing units |
| 13 | intermediate buffer memory |
| 14 | main memory |
| 21-0, 21-1, 21-k | sets |
| 22, 22' | data blocks |
| 23-0, 23-1, 23-2, 23-3 | banks |
| 41 | address information |
| 42 | bank-selection address bits |
| 43 | set-selection address bits |

### Claims

1. A data processing system having hierarchical memories, including a central processing unit (11-1, ... 11-n) having a buffer memory (BM-1, ... BM-n), a main memory (14) having a plurality of memory banks (23-0, ... 23-3) to be accessed by the central processing unit via an intermediate buffer memory (13) coupled between the central processing unit and the main memory; wherein move-out and move-in of an accessed data block (22) between the intermediate buffer memory and the main memory are achieved by a swap control method; wherein the two memories are controlled by a set associative method; wherein the main memory is accessed by an interleave control method and the main memory and the intermediate buffer memory are accessed by address data which include both bank-selection address bits, for specifying any one of the banks, and set-selection address bits, for specifying the data block to be moved-out or moved-in; characterised by address modifying means (81) for replacing a group of the bank-selection address bits by a group of the set-selection address bits.

2. A system as claimed in claim 1, characterised in that the group of bank-selection address bits is replaced by a group of the set-selection address bits in such a manner as to access the main memory (14) in a $2^m$-way interleave control mode, where m is the number of set-selection bits to replace the bank-selection address bits.

3. A system as claimed in claim 2, characterised in that the number m is defined by the expression

$$B/2^m = M$$

where B is the number of said banks and M is a positive integer.

4. A system as claimed in claim 3, characterised in that m is determined by the expression

$$m = \max \left\{ x : \frac{B}{2^x} = M \right\}$$

whereby m is obtained as the maximum value of x, when x satisfies the condition

$$\frac{B}{2^x} = M$$

5. A system as claimed in claim 2, characterised in that m is determined by the expression

$$m = \min\left\{ x, \ y: \frac{B}{2^x} = Mx, \ \frac{\left(\dfrac{U}{u}\right)}{2^y} = My \right\}$$

where m is a minimum value chosen from the numbers x and y, the integer x being a maximum value which satisfies the condition

$$\frac{B}{2^x} = Mx$$

(wherein B is the number of banks and Mx is a positive integer), and the integer y being a maximum value which satisfies the condition

$$\frac{\left(\dfrac{U}{u}\right)}{2^y} = My$$

(wherein U indicates the total capacities of units for comprising all of the banks, u indicates the capacity of a unit for comprising each of the banks and My is a positive integer).

6. A system as claimed in any preceding claim, characterised in that one or more of the lower bits of the bank-selection address bits are replaced by one or more lower bits of the set-selection address bits.

7. A system as claimed in any preceding claim, characterised in that the set-selection address bits are partially modified by a hashing operation, and the bank-selection address bits are partially replaced by non-hashed bits of the set-selection address bits.

**Patentansprüche**

1. Datenverarbeitungssystem mit hierarchischen Speichern, mit einer zentralen Prozessoreinheit (11-1, ... 11-n), die einen Pufferspeicher (BM1, ... BMn) hat, einem Hauptspeicher (14), der eine Vielzahl von Speicherbanken (23-0, ... 23-3) hat, zu denen die zentrale Prozessoreinheit über einen Zwischenpufferspeicher (13) zugreift, der zwischen der zentralen Prozessoreinheit und dem Hauptspeicher gekoppelt ist; bei der das Reinschieben und Rausschieben eines zugegriffenen Datenblocks (22) zwischen dem Zwischenpufferspeicher und dem Hauptspeicher durch ein Swap-Steuerverfahren erzielt wird; bei dem die beiden Speicher durch ein satz-assoziatives Verfahren gesteuert werden; bei dem zu dem Hauptspeicher durch ein Überlappungs-Steuerverfahren zugegriffen wird und zu dem Hauptspeicher und dem Zwischenpufferspeicher durch Adressendaten zugegriffen wird, die sowohl Bankselektionsadressenbits, zum Spezifizieren irgendeiner der Banken, als auch Satzselektionsadressenbits, zum Spezifizieren des Datenblocks, der rausgeschoben oder reingeschoben werden soll, umfassen; gekennzeichnet durch Adressenmodifizierungseinrichtungen (81), zum Ersetzen einer Gruppe von Bankselektionsadressenbits durch eine Gruppe von Satz-Selektionsadressenbits.

2. System nach Anspruch 1, dadurch gekennzeichnet, daß die Gruppe von Bankselektionsadressenbits durch eine Gruppe von Satzselektionsadressenbits in solch einer Weise ersetzt wird, um zu dem Hauptspeicher (14) in einem $2^m$-weg-Überlappungs-Steuerverfahren zuzugreifen, wobei m die Zahl der Satzselektionsbits ist, um die Bankselektionsadressenbits zu ersetzen.

3. System nach Anspruch 2, dadurch gekennzeichnet, daß die Zahl m definier ist durch den Ausdruck

$$B/2^m = M$$

wobei B die Zahl der genannten Banken und M eine positive ganze Zahl ist.

4. System nach Anspruch 3, dadurch gekennzeichnet, daß m bestimmt ist durch den Ausdruck

$$m = \max\left\{ x: \frac{B}{2^x} = M \right\}$$

wodurch m als Maximalwert von x erhalten wird, wenn x die Bedingung

$$\frac{B}{2^x} = M$$

erfüllt.

5. System nach Anspruch 2, dadurch gekennzeichnet, daß m bestimmt ist durch den Ausdruck

$$m=\min\left\{x,\ y:\frac{B}{2^x}=Mx,\ \frac{\left(\frac{U}{u}\right)}{2^y}=My\right\}.$$

wobei m der Maximalwert ist, ausgewählt aus den Zahlen x und y, wobei die ganze Zahl x der Maximalwert ist, der die Bedingung

$$\frac{B}{2^x}=Mx$$

erfüllt (wobei B die Zahl der Banken und Mx eine positive ganz Zahl ist), und die ganze Zahl y ein Maximalwert ist, der die Bedingung

$$\frac{\left(\frac{U}{u}\right)}{2^y}=My$$

erfüllt, (wobei U die totale Kapazität der Einheiten zur Umfassung aller Banken angibt, u die Kapazität einer Einheit zur Umfassung jeder der Banken und My eine positive ganze Zahl ist).

6. System nach einem der vorhergehenden Ansprüche, dadurch gekennzeichnet, daß eines oder mehrere der unteren Bits der Bankselektionsadressenbits durch eines oder mehrere untere Bits der Satzselektionsadressenbits ersetzt werden.

7. System nach einem der vorhergehenden Ansprüche, dadurch gekennzeichnet, daß die Satzselektionsadressenbits durch einen Hash-Betrieb teilweise modifiziert werden, und die Bankselektionsadressenbits teilweise durch Bits, die keinem Hash-Betrieb unterworfen wurden, von den Satzselektionsadressenbits ersetzt werden.

**Revendications**

1. Système de traitement de données comportant des mémoires hiérarchiques, incluant une unité centrale de traitement (11-1, ... 11-n) qui comporte une mémoire tampon (BM1, ... BMn), une mémoire centrale (14) comportant plusieurs blocs de mémoire (23-0, ... 23-3) devant faire l'objet d'un accès par l'unité centrale de traitement via une mémoire tampon intermédiaire (13) couplée entre l'unité centrale de traitement et la mémoire centrale; dans lequel des opérations de sortie de mémoire et d'introduction en mémoire d'un bloc de données ayant fait l'objet d'un accès (22) entre la mémoire tampon intermédiaire et la mémoire centrale sont exécutées par un procédé de commande de permutation; dans lequel les deux mémoires sont commandées par un procédé associatif d'ensembles; dans lequel la mémoire central fait l'objet d'un accès par un procédé de commande d'imbrication et la mémoire centrale et la mémoire tampon intermédiaire font l'objet d'un accès par des données d'adresse qui comprennent à la fois des bits d'adresse de sélection de bloc de mémoire, pour spécifier n'importe lequel des blocs de mémoire, et des bits d'adresse de sélection d'ensemble pour spécifier le bloc de données à sortir de mémoire ou à introduire en mémoire; caractérisé par un moyen de modification d'adresse (81) pour remplacer un groupe des bits d'adresse de sélection de bloc de mémoire par un groupe des bits d'adresse de sélection d'ensemble.

2. Système selon la revendication 1, caractérisé en ce que le groupe de bits d'adresse de sélection de bloc de mémoire est remplacé par un groupe des bits d'adresse de sélection d'ensemble de manière à avoir accès à la mémoire centrale (14) dans un mode de commande d'imbrication à $2^m$ voies, où m est le nombre de bits de sélection d'ensemble pour remplacer les bits d'adresse de sélection de bloc de mémoire.

3. Système selon la revendication 2, caractérisé en ce que le nombre m est défini par l'expression

$$B/2^m=M$$

où B est le nombre de blocs de mémoire et M est un entier positif.

4. Système selon la revendication 3, caractérisé en ce que m est déterminé par l'expression

$$m=\max\left\{x:\frac{B}{2^x}=M\right\}$$

par laquelle m est obtenu comme la valeur maximale de x, quand x satisfait la condition

$$\frac{B}{2^x}=M$$

5. Système selon la revendication 2, caractérisé en ce que m est déterminé par l'expression

$$m=\min\left\{x,\ y:\frac{B}{2^x}=Mx,\ \frac{\left(\dfrac{U}{u}\right)}{2^y}=My\right\}$$

où m est une valeur minimale choisie parmi les nombres x et y, l'entier x étant une valeur maximale qui satisfait la condition

$$\frac{B}{2^x}=Mx$$

(où B est le nombre de blocs de mémoire et Mx est un entier positif), et l'entier y étant une valeur maximale qui satisfait la condition

$$\frac{\left(\dfrac{U}{u}\right)}{2^y}=My$$

(où U indique les capacités totales des unités pour constituer tous les blocs de mémoire, u indique la capacité d'une unité pour constituer chacune des blocs de mémoire et My est un entier positif).

6. Système selon l'une quelconque des revendications 1 à 5, caractérisé en ce qu'un ou plusieurs des bits de poids faible des bits d'adresse de sélection de bloc de mémoire sont remplacés par un ou plusieurs bits de poids faible des bits d'adresse de sélection d'ensemble.

7. Système selon l'une quelconque des revendications 1 à 6, caractérisé en ce que les bits d'adresse de sélection d'ensemble sont partiellement modifiés par une opération d'addressage calculé, et en ce que les bits d'adresse de sélection de bloc de mémoire sont partiellement remplacés par les bits d'adresse non calculée des bits d'adresse de sélection d'ensemble.

# Fig. 1

# Fig. 2

0 032 956

## Fig. 3A

| 0-WAY | | MOVE-IN ① | MOVE-IN ② | MOVE-OUT③ | |
|-------|--|-----------|-----------|-----------|--|

1-WAY  MOVE-OUT②  MOVE-IN ③

2-WAY  MOVE-OUT①

3-WAY  —————————————————— T ——————————————————

# Fig. 3B

| | |
|---|---|
| 0 - WAY | MOVE-OUT③ MOVE-IN ③ |
| I - WAY | MOVE·OUT② MOVE-IN ② |
| 2 - WAY | MOVE-OUT① MOVE-IN ① |
| 3- WAY | – – – – – – – – – – – – – – – – |

t

# Fig. 4

41

| 0 | 5 6 | 10 11 | 15 16 | 25 26 | 31 |
|---|---|---|---|---|---|
| | BANK ADDRESS | | SET ADDRESS | | |

42    43

## Fig. 5A
(m=0)

BANK #0    BANK #1    BANK #2    BANK #3

23-0    23-1    23-2    23-3

## Fig. 5B
(m=1)

BANK #0    BANK #1    BANK #2    BANK #3

23-0    23-1    23-2    23-3

## Fig. 5C
(m=2)

BANK #0    BANK #1    BANK #2    BANK #3

23-0    23-1    23-3    23-4

# Fig. 6

Fig. 7

0 032 956

# Fig. 8A

# Fig. 8B